# EUROPEAN PATENT APPLICATION

(11) **EP 1 575 052 A2**
(43) Date of publication of application: **14.09.2005**
(21) Application number: 05101468.6
(22) Date of filing: 25.02.2005
(51) Int. Cl.: G11B 33/02, G11B 15/675

(54) **Tape deck**

(30) Priority: 10.03.2004 KR 2004016028
(71) Applicant: SAMSUNG ELECTRONICS CO., LTD., Gyeonggi-Do 442-742 (KR)
(72) Inventor: LEE, Chang-hee, Gyeonggi-do (KR)
(74) Representative: Geary, Stuart Lloyd

(57) **Abstract**

A deck chassis assembly for a magnetic recording/reproducing apparatus, in which some parts may be sub-assembled for independent operation, comprises a base chassis mounting a moving deck therein. The base chassis includes integrally formed sidewalls at opposite sides thereof to mount and receive the moving deck. A housing chassis has sidewalls of which opposite ends are rotatably connected to ends of the sidewalls of the base chassis, and a link member is interposed between the housing chassis and the base chassis to enable the housing chassis to rotate a predetermined angle relative to the base chassis in an opening and closing manner.

## Description

The present invention relates to a tape deck assembly comprising a base chassis and a housing chassis.

In general, magnetic recording/reproducing apparatuses are used to record and reproduce sound or image information on a recording medium such as a magnetic tape. Magnetic recording/reproducing apparatuses include, for example, video cassette tape recorders (VCR) and a camcorders.

A deck mechanism is employed in the magnetic recording/reproducing apparatus. The magnetic recording/reproducing apparatus further comprises a cassette loading means to move a tape cassette into a predetermined position and a moving deck having tape running means to take up the magnetic tape from a cassette, as the cassette is loaded, and run the magnetic tape to a head unit where it is read. Moreover, the apparatus includes a deck chassis assembly, in which the moving deck is mounted together with means for opening and closing one end of the moving deck so that the cassette loading means closes and opens.

The above-structured deck mechanism is typically driven in accordance with a control program, stored in a control part, and performs various functions such as loading and unloading of the tape cassette, recording and reproducing of information on the magnetic tape, fast forwarding and rewinding and the composite driving of the individual components thereof.

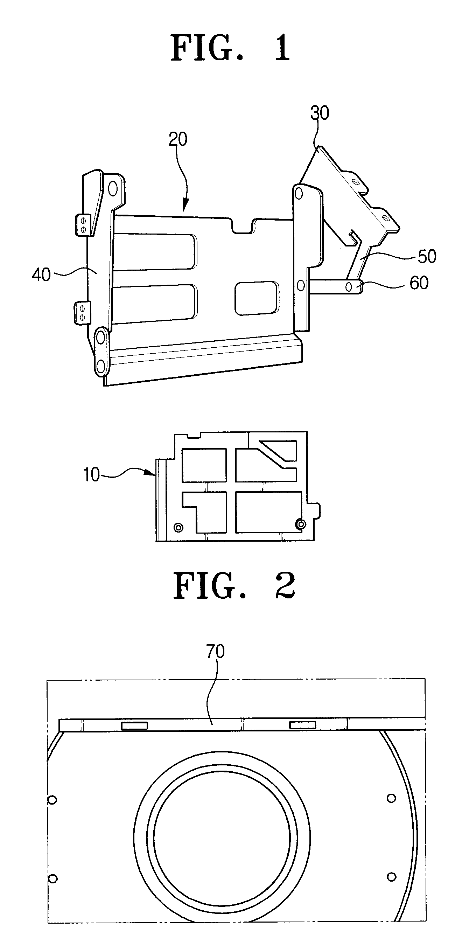

Figure 1 illustrates an example of a conventional deck chassis assembly for a magnetic recording/reproducing apparatus having a moving deck.

Referring to Figure 1, the conventional deck chassis assembly for a magnetic recording/reproducing apparatus comprises a base chassis 10, a housing chassis 20, a left bracket 30, a right bracket 40, a first link 50 and a second link 60.

The base chassis 10 is fixed on a main body (not shown) of a magnetic recording/reproducing apparatus, and the moving deck (not shown) is mounted to an upper part of the base chassis 10.

The housing chassis 20 is rotatable by a predetermined angle about one end such that the cassette loading means of the moving deck, mounted in the base chassis 10, may rotate with respect to a front top section of the base chassis 10. Thus, the front top section of the base chassis 10 is opened. A door (not shown) is provided on the outside of the housing chassis 20 and has a catch for preventing the housing chassis 20 from being opened.

The left and right brackets 30, 40 support the housing chassis 20. Therefore, the housing chassis 20 is disposed above the base chassis 10 and may pivot by a predetermined angle with respect to the base chassis 10, using the first and the second links 50, 60. The upper ends of the left and the right brackets 30, 40 are rotatably connected to corresponding positions on the housing chassis 20. Lower parts of the left and the right brackets 30, 40 are fixed to the main body of the magnetic recording/reproducing apparatus.

The first and second links 50, 60 are interposed between the left bracket 30 and the housing chassis 20. The housing chassis 20 may be opened to a predetermined angle with respect to the base chassis 10. The first and the second links 50, 60 are rotatably connected by a rivet hinge to each other at one end. The links 50, 60 are also rotatably connected to the housing chassis 20 and the left bracket 30 at the other end of each, respectively, by a rivet hinge.

A locking bracket 70 is provided at the front of the base chassis 10 to engage with the catch of the door, connected to the housing chassis 20. Thus, the housing chassis 20 is prevented from being opened. An example of the locking bracket 70 is illustrated in Figure 2.

In the above-structured deck chassis assembly for a magnetic recording/reproducing apparatus, when a user pushes the door so that the catch of the door escapes from the locking bracket 70, the housing chassis 20 turns by a predetermined angle about the rivet hinges. Accordingly, the housing chassis 20 is opened. A sensor (not shown) within the main body senses the housing chassis 20 opened, and therefore, the cassette loading means of the moving deck is ejected. As a result, the user can load or unload a cassette tape to or from the moving deck.

However, the conventional deck chassis assembly for a magnetic recording/reproducing apparatus comprises at least seven parts, including: the base chassis 10, the housing chassis 20, the left and right brackets 30, 40, the first and second links 50, 60 and the locking bracket 70.

In addition, in the conventional deck chassis assembly, the base chassis 10, a subassembly of the housing chassis 20 and the locking bracket 70 are separately connected to the main body of the magnetic recording/reproducing apparatus.

Furthermore, in the conventional deck chassis assembly, a test for the operation of the moving deck may be performed only after the parts are completely assembled into the deck chassis assembly. Therefore, if a problem arises while processing or assembling the parts, the deck mechanism often needs to be separated from the magnetic recording/reproducing apparatus for reassembly or readjustment. Reassembly or readjustment takes a considerable amount of time.

Accordingly, there is a need for a magnetic recording/reproducing apparatus with improved a deck mechanism which is relatively inexpensive to manufacture and reduces costs for packaging and material handling, by minimizing the number of parts.

A tape deck, according to the present invention, is characterised in that the housing chassis is pivotably coupled to the base chassis for movement between an open, tape-receiving position and a closed position.

Preferably, the base chassis includes a floor and side members, projecting substantially perpendicularly from opposite sides of said floor, and the housing chassis is hinged to the side members for said movement between its open, tape-receiving position and its closed position.

A hinged link, coupling the base chassis and the housing chassis may be included and have a projection received in a slot in one of said side members and moves along the slot during said movement of the housing chassis.

Sensing means may be included for detecting that the housing chassis in its open position. The sensing means may comprises a sensor, e.g. a switch or an optoelectronic device, mounted to the base chassis, and a tab on the housing chassis and positioned to be detected by the sensor when the housing chassis is in its open position.

Additional preferred and optional features are set forth in claims 6 to 15 appended hereto.

An embodiment of the present invention will now be described, by way of example, with reference to Figures 3 to 8 of the accompanying drawings, in which:
Figure 1 is a perspective view of an conventional deck chassis assembly for a magnetic recording/reproducing apparatus;
Figure 2 is a perspective view of a locking part for fixing an openable door of the conventional deck chassis assembly;
Figure 3 is a perspective view of a deck chassis assembly for a magnetic recording/reproducing apparatus according to the present invention;
Figure 4 is an exploded perspective view of the deck chassis assembly of the magnetic recording/reproducing apparatus shown in Figure 3;
Figure 5 is a perspective view showing the housing chassis of the deck chassis assembly of the magnetic recording/reproducing apparatus of Figure 3 in its closed position;
Figure 6 is a perspective view of the deck chassis assembly of the magnetic recording/reproducing apparatus of Figure 3 mounted with a moving deck and a circuit board;
Figure 7 is an exploded perspective view showing a camera, employing the deck chassis assembly according to an embodiment of the present invention;
Figure 8 is a perspective view of the deck chassis assembly of Figure 7 on which the door is mounted.

Well-known functions and constructions will not be described in detail to avoid obscuring the invention.

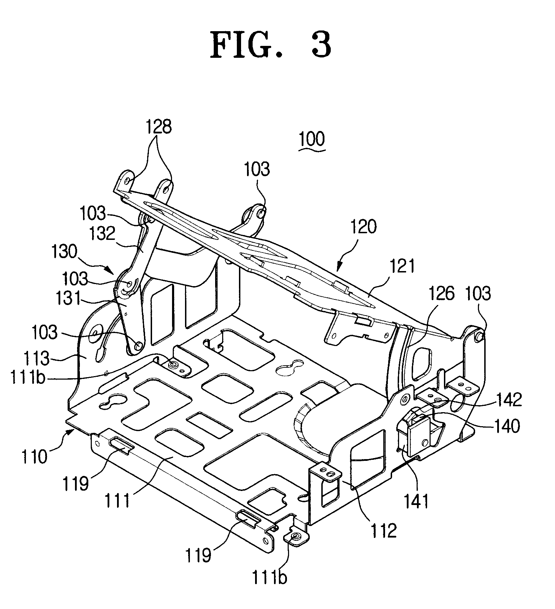

Referring to Figures 3 to 5, a deck chassis assembly 100 for a magnetic recording/reproducing apparatus, according to the present invention, comprises a base chassis 110, mounted in the main body of the magnetic recording/reproducing apparatus, a housing chassis 120, rotatable through a predetermined angle to open and close a top portion of the base chassis 110, and a link member 130, interposed between the base chassis 110 and the housing chassis 120. Thus, the housing chassis 120 may be opened and closed through a predetermined angle with respect to the base chassis 110.

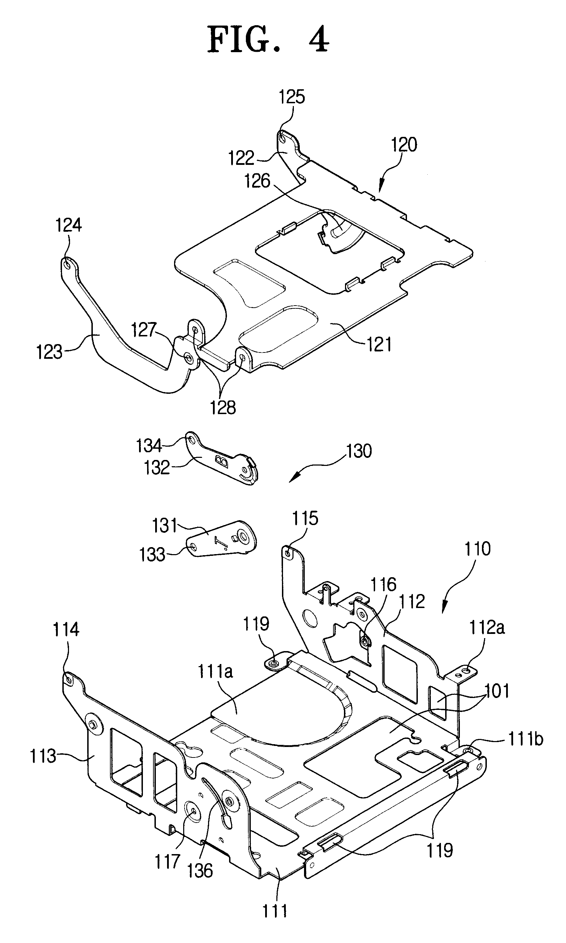

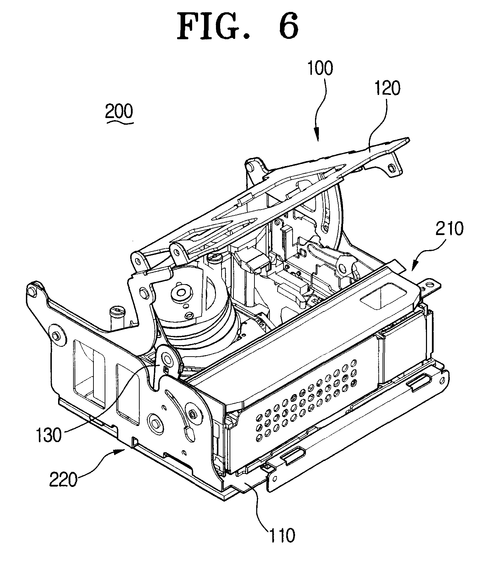

A moving deck 210 (Figure 6) is mounted at an upper portion of the base chassis 110 for loading and unloading of tape cassettes (not shown). The base chassis 110 has sidewalls 112, 113, integrally formed on opposite sides, to define a space for receiving the moving deck 210. Accordingly, the base chassis 110 has a substantially flattened U-shape. As shown in Figure 4, a motor receiving portion 111a of the moving deck 210, preferably for a capstan motor, is formed by processing the bottom 111 of the base chassis 110. The sidewalls 112, 113 of the base chassis 110 respectively have first hinge holes 114, 115 at upper ends thereof to rotatably connect a rivet hinge 103 with the housing chassis 120 (which will be described hereinbelow in detail). A second hinge hole 117 is formed on one sidewall 113 of the base chassis 110 to rotatably connect with the one end of the link member 130. Thus, the housing chassis 120 may easily turn about the link member 130 through a predetermined angle in an opening and closing manner. Additionally, to control the deck mechanism, the bottom 111 of the base chassis 110 has a plurality of tap holes 111b for fixing the circuit board 220 (Figure 6). The other sidewall 112 has a plurality of fixing holes 112a to fix the base chassis 110 to the main body of the magnetic recording/reproducing apparatus. In addition to the tap holes 111 band fixing holes 112a, a plurality of openings 101 may be formed on the bottom 111 and sidewalls 112 and 113 of the base chassis 110. This reduces the weight of the base chassis 110. The number of openings 101 is determined in accordance with the strength required of the base chassis 110.

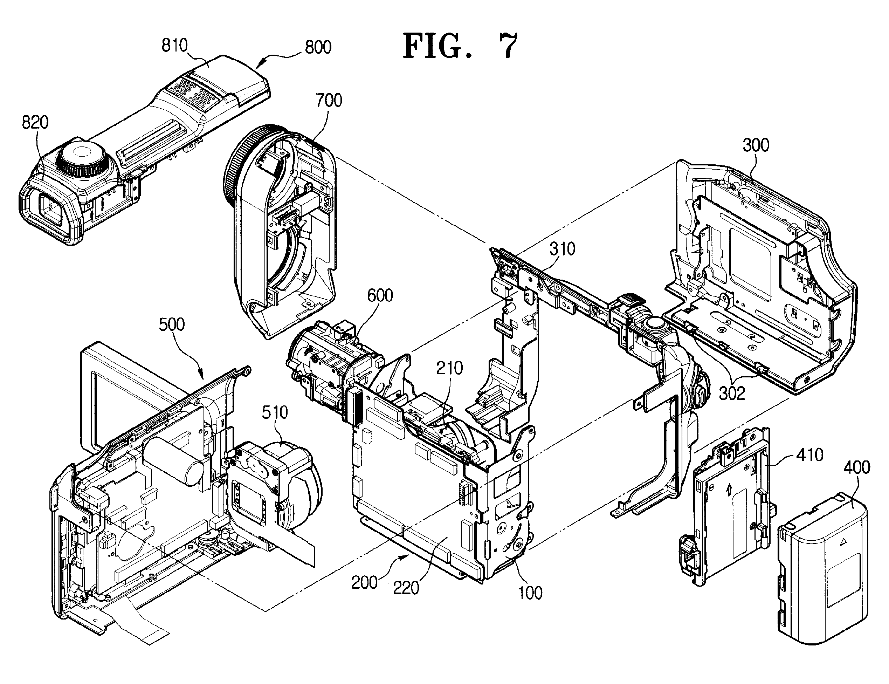

A locking part 119, preferably made by moulding, may be provided at the front of the base chassis 110, that is, where the catch 302 (Figure 7) of the door 300 (Figure 7) is inserted when the base chassis 110 is mounted to the main body of the magnetic recording/reproducing apparatus.

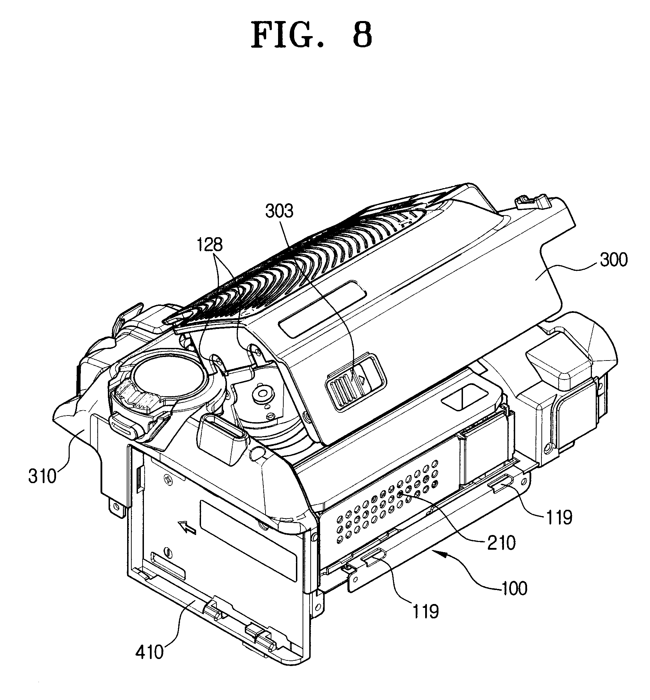

The housing chassis 120 is preferably formed as one body and has a substantially flattened U-shape. The housing chassis 120 has a width receivable in the base chassis 110. Sidewalls 122, 123 of the housing chassis 120 have respective third hinge holes 124, 125 at lower ends thereof for being rotatably connected with the base chassis 110 by rivet hinges 103. One sidewall 123 of the housing chassis 120 has a fourth hinge hole 127 formed for rotatable connection with the one end of the link member 130. Thus, the housing chassis 120 can easily turn about the link member 130 through a predetermined angle relative to the base chassis 110. The sidewalls 122, 123 of the housing chassis 120 may have various forms, to the extent that a bottom 121 of the housing chassis 120 maintains suitable strength to open and close the top of the base chassis 110. As shown in Figure 8, the bottom 121 of the housing chassis 120 includes a door connection hole 128 for connecting the door 300.

A first guide slot 126 is formed on the other sidewall 122 of the housing chassis 120, opposite to the sidewall 123 connected to the link member 130. The first guide slot 126 guides and restricts the opening and closing movement of the housing chassis 120. The sidewall 112 of the base chassis 110, corresponds to the sidewall 122 of the base chassis 120, and is provided with a first guide pin 116 guided by the first guide slot 126. The first guide pin 116 may be formed by processing the rivet hinge 103.

The link member 130 enables the housing chassis 120 to turn relative to the base chassis 110 by a predetermined angle in an opening and closing manner. The link member 130 may be structured in various manners. In this embodiment, the link member 130 comprises a first link 131 and a second link 132.

A first link hole 133 formed on one end of the first link 131. The first link hole 133 is rotatably connected by the rivet hinge 103 with the second hinge hole 117 formed on one sidewall 113 of the base chassis 110. The other end of the first link 131 is rotatably connected with one end of the second link 132 by the rivet hinge 103. A second link hole 134, formed on the other end of the second link 132, is rotatably connected by the rivet hinge 103 with the fourth hinge hole 127 of the sidewall 123 of the housing chassis 120. Accordingly, the first and the second links 131, 132 enable the housing chassis 120 to open and close the top of the base chassis 110 by a predetermined angle. To restrict the turning angle of the first link 131, a second guide slot 136 is formed at one sidewall 113 of the base chassis 110, where the fist link 131 is rotatably connected, and a second guide pin (not shown) is formed corresponding to the second guide slot 136. Consequently, the turning angle of the first link 131 is restricted, thereby smoothing the opening and closing operation of the housing chassis 120.

In order to mount the moving deck 210 and test the operation of the moving deck 210, before the deck chassis assembly 100 is mounted in the main body of the magnetic recording/reproducing apparatus, a sensor 140 is mounted with the deck chassis assembly 100. The sensor 140 detects opening and closing of the housing chassis 120. Thus, a sensor mounting portion 141 is provided on one sidewall 112 of the base chassis 110 and a tab 142 is provided at the housing chassis 120 to operate the sensor 140. As shown in Figure 3, the sensor mounting portion 141 is formed outward on one sidewall 112 of the base chassis 110 and has the first guide pin 116. The tab 142 is formed on the corresponding sidewall 122 of the housing chassis 120 to operate the sensor 140, mounted in the sensor mounting portion 141. Therefore, the sensor 140 is first connected to the circuit board 220 (Figure 6) to control the moving deck 210 and to a test jig which supplies power to the circuit board 220 (Figure 6). Thus, the operation of the moving deck 210, which moves in and out according to the opening and closing of the housing chassis 120, can be tested even before assembly of the magnetic recording/reproducing apparatus is complete.

Hereinbelow, an assembling method and the operation of the deck chassis assembly 100, as structured above, will be described in greater detail with reference to the accompanying drawings.

The base chassis 110 and the housing chassis 120 are rotatably connected to each other using the rivet hinge 103. The rivet hinge 103 connection is accomplished by aligning the first hinge holes 114, 115 of the base chassis 110 and the third hinge holes 124, 125 of the housing chassis 120. The rivet hinge 103, preferably of a shaft shape, is inserted in the first and third hinge holes. Both ends of the rivet hinge 103 are compressed by a riveting machine so that the rivet hinges 103 do not come out of the holes. Therefore, the housing chassis 120 and the base chassis 110 can smoothly turn about the rivet hinge 103. When the first guide slot 126 is formed in the housing chassis 120 and the first guide pin 116 is formed in the base chassis 110, the hinge riveting is performed on the sidewalls 112, 113 of the base chassis 110 and the sidewalls 122, 123 of the housing chassis 120, so that the first guide pin 116 is inserted into the first guide slot 126.

After respective ends of the first and the second links 131, 132 have been rotatably connected to each other by the rivet hinge 103, the first link hole 133 of the first link 131 is connected to the second hinge hole 117 of the base chassis 110 by the rivet hinge 103. Additionally, the second link hole 134 is connected to the fourth hinge hole 127 of the housing chassis 120 by the rivet hinge 103. Therefore, the housing chassis 120 can turn relative to the base chassis 110 through a predetermined angle in an opening and closing manner. If the second guide pin (not shown) is formed in the first link 131 and the second guide slot 136 is formed in the sidewall 113 of the base chassis 110, the first link 131 is connected to the base chassis 110 by the rivet hinge 103 after the second guide pin (not shown) has been inserted in the second guide slot 136.

Finally, by the mounting of the sensor 140 in the sensor mounting portion 141 of the base chassis 110, the deck chassis assembly 100 of the magnetic recording/reproducing apparatus is completely assembled.

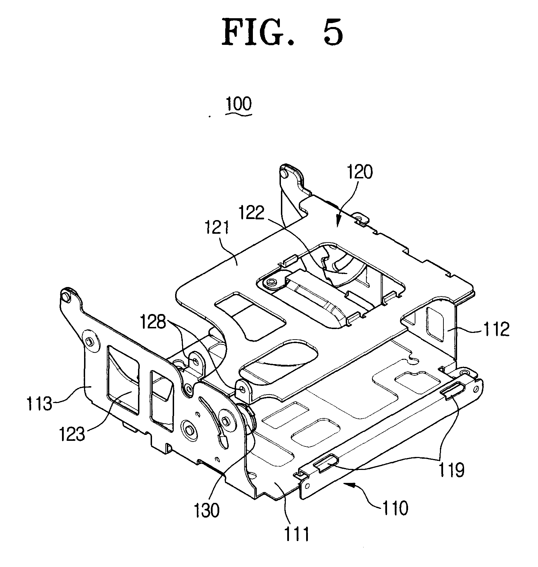

As described above, the base chassis 110, the housing chassis 120, the first link 131 and the second link 132 are rotatably connected by the rivet hinge 103 at five spots. Therefore, a user can open and close the housing chassis 120 relative to the base chassis 110 by a predetermined angle simply by pushing the front of the housing chassis 120. More specifically, as shown in Figure 6, when the user pushes upwardly on the front of the housing chassis 120, the housing chassis 120 is opened by a predetermined angle. As shown in Figure 5, when the user pushes downwardly on the front of the housing chassis 120, the housing chassis 120 closes the top of the base chassis 110.

As shown in Figure 6, the moving deck 210 and the circuit board 220 controlling the moving deck 220 are mounted to the above-assembled deck chassis assembly 100, thereby completing a deck assembly 200.

Hereinbelow, with reference to Figures 7 and 8, a camcorder having a still camera lens as well as a camcorder lens will be described as an example of the magnetic recording/reproducing apparatus which employs the deck chassis described above.

Referring to Figure 7, the camcorder comprises the deck assembly 200, including the moving deck 210, in which tape cassettes (not shown) can be loaded and unloaded. Additionally, door 300 is connected to the housing chassis 120 and left casing 310 serves as the frame of the door A battery mounting portion 410 is formed at the rear of the left casing 310 for receiving a battery 400. A right casing 500 constitutes the main body of the dual camcorder together with the left casing 310 and comprises a subassembly with a camera unit which includes a still camera lens 510. A camcorder lens unit 600 is fixed at the front of the deck assembly 200. The camcorder also includes a front casing 700, for fixing the still camera lens 510 and the camcorder lens unit 600, and an upper casing 800, including a flash 810 and a viewfinder 820.

The deck assembly 200 comprises the deck chassis assembly 100 described above. The moving deck 210 is mounted to the deck chassis assembly 100 and the circuit board 220. The circuit board 220 comprises a moving image processing circuit for recording moving images as well as a circuit for controlling the moving deck 210. The left casing 310 is fixed to the deck assembly 200 and the door 300 is mounted to the door connection hole 128 of the housing chassis 120, as shown in Figure 8. If the door 300 is pressed, in this state, the catch 302 (Figure 7) formed at an inside of a lower portion of the door 300 is engaged with the locking part 119 of the deck chassis assembly 100. As shown in Figure 8, in order to open the door 300, a catch releasing button 303, provided at an outside of the lower part of the door 300, is pushed in a sliding manner so that the catch 302 escapes from the locking part 119. When the door 300 is open, the tab 142 of the housing chassis 120 is disposed on a front of the sensor 140. Therefore, the sensor 140 senses the door 300 opened and transmits a signal to the circuit board 220. Accordingly, the circuit board 220 controls the moving deck 210 so that the cassette loading means of the moving deck 210 protrudes with respect to the base chassis 110. When the cassette loading means of the moving deck 210 protrudes, the user can load or unload the tape cassette to or from the moving deck 210. The operation of the moving deck 210, including loading the tape cassette toward a head drum and controlling running of a magnetic tape, will not be described in detail since it is the same as in conventional moving decks.

The deck assembly 200, the left casing 310 and the door 300 are sub-assembled by mounting the right casing 500, the camcorder lens unit 600, the front casing 700 and the upper casing 800 in order, and assembly of the camcorder is complete.

As can be appreciated from the above description, the deck chassis assembly for a magnetic recording/reproducing apparatus according to the present invention may save costs for material handling, packaging and management by reducing the number of component parts. While the conventional deck chassis assembly comprises seven parts, the deck chassis assembly 200 according to the present invention may comprise only the following four main parts: the base chassis, the housing chassis, the first link and the second link.

In the deck chassis assembly for a magnetic recording/reproducing apparatus according to an embodiment of the present invention, the deck chassis assembly 200 is mounted to the main body of the magnetic recording/reproducing apparatus, as one independent module. Therefore, assembly time is minimized. Moreover, assembly thereof is simplified.

Moreover, according to an embodiment of the present invention, an operation test for the moving deck 210 may be performed using a test jig when the deck chassis assembly 200 and the moving deck 210 are sub-assembled. In other words, since the quality of the deck chassis assembly 200 may be tested and adjusted before complete assemble of the magnetic recording/reproducing apparatus, time testing and adjustments is saved.

## Claims

1. A tape deck assembly comprising:
a base chassis (110); and
a housing chassis (120),
**characterised in that** the housing chassis (120) is pivotably coupled to the base chassis (110) for movement between an open, tape-receiving position and a closed position.

2. A tape deck according to claim 1, wherein the base chassis (120) includes a floor (111) and side members (112, 113), projecting substantially perpendicularly from opposite sides of said floor (111), and the housing chassis (120) is hinged to the side members (112, 113) for said movement between its open, tape-receiving position and its closed position.

3. A tape deck according to claim 1 or 2, including a hinged link (130), coupling the base chassis (110) and the housing chassis (120), wherein a projection from said link (130) is received in a slot (136) in one (113) of said side members and moves along the slot (136) during said movement of the housing chassis (120).

4. A tape deck according to any preceding claim, including sensing means (140, 142) for detecting that the housing chassis (120) in its open position.

5. A tape deck according to claim 4, wherein the sensing means comprises a sensor (140), mounted to the base chassis (110), and a tab (142) on the housing chassis (120) and positioned to be detected by the sensor (140) when the housing chassis (120) is in its open position.

6. A deck chassis assembly for a magnetic recording/reproducing apparatus, including a moving deck to open and close a door so that the moving deck submerges and emerges, the deck chassis assembly comprising:
a base chassis mounting integrally formed with sidewalls at opposite sides thereof to mount and receive the moving deck therein;
a housing chassis having sidewalls of which opposite ends thereof are rotatably connected to ends of the sidewalls of the base chassis; and
a link member interposed between the housing chassis and the base chassis to enable the housing chassis to rotate a predetermined angle relative to the base chassis in an opening and closing manner.

7. The deck chassis assembly of claim 6, wherein
the link member comprises a first link rotatably connected to a front of one of the sidewalls of the base chassis at one end; and
a second link rotatably connected to a front of one of the sidewalls of the housing chassis at one end and rotatably connected to the other end of the first link at the other end.

8. The deck chassis assembly of claim 7, wherein
the base chassis has a locking part for fixing the door on the front of one of the sidewalls thereof.

9. The deck chassis assembly of claim 7, wherein
a guide groove is formed on one of the sidewalls of the housing chassis, where the link member is not mounted, to guide an opening and closing movement of the housing chassis, and a guide pin is formed at a corresponding sidewall of the base chassis to connect to the guide groove.

10. The deck chassis assembly of claim 9, wherein
one of the sidewalls of the base chassis has a sensor mounting portion for receiving a sensor which senses the housing chassis opening and closing, and the corresponding sidewall of the housing chassis has a toggle for operating the sensor.

11. A deck chassis assembly for a magnetic recording/reproducing apparatus, including a moving deck to open and close a door so that the moving deck closes and opens, the deck chassis assembly comprising:
a base chassis mounting integrally formed with sidewalls at opposite sides thereof to mount and receive the moving deck therein;
a housing chassis having sidewalls of which opposite ends thereof are rotatably connected to ends of the sidewalls of the base chassis;
a link member interposed between the housing chassis and the base chassis to enable the housing chassis to rotate a predetermined angle relative to the base chassis in an opening and closing manner; and
the link member comprises a first link rotatably connected to a front of one of the sidewalls of the base chassis at one end.

12. The deck chassis assembly of claim 11, wherein
a second link rotatably connected to a front of one of the sidewalls of the housing chassis at one end and rotatably connected to the other end of the first link at the other end.

13. The deck chassis assembly of claim 11, wherein
the base chassis has a locking part for fixing the door on the front of one of the sidewalls thereof.

14. The deck chassis assembly of claim 11, wherein
a guide groove is formed on one of the sidewalls of the housing chassis, where the link member is not mounted, to guide an opening and closing movement of the housing chassis, and a guide pin is formed at a corresponding sidewall of the base chassis to connect to the guide groove.

15. The deck chassis assembly of claim 11, wherein
one of the sidewalls of the base chassis has a sensor mounting portion for receiving a sensor which senses the housing chassis opening and closing, and the corresponding sidewall of the housing chassis has a toggle for operating the sensor.
